# FASCICULE DE BREVET EUROPEEN

(11) **EP 1 836 823 B1**
(45) Date de publication et mention de la délivrance du brevet: **08.09.2010**
(21) Numéro de dépôt: 05825614.0
(22) Date de dépôt: 19.12.2005
(51) Int. Cl.: H04L 29/08, G06Q 30/00, G06Q 10/00, H04L 29/06

(54) **PROCEDE ET SYSTEME DE MISE EN RELATION DE PERSONNES DANS UN RESEAU DE TELECOMMUNICATION DE TYPE INTERNET**
VERFAHREN UND SYSTEM ZUM VERBINDEN VON PERSONEN IN EINEM TELEKOMMUNIKATIONSNETZ DES INTERNETTYPS
METHOD AND SYSTEM FOR CONNECTING PEOPLE IN AN INTERNET-TYPE TELECOMMUNICATION NETWORK

(30) Priorité: 20.12.2004 FR 0413557
(43) Date de publication de la demande: 26.09.2007
(73) Titulaire: FRANCE TELECOM, 75015 Paris (FR)
(72) Inventeur: VILAIN, Arnaud, F-75015 Paris (FR); RODRIGUES, Jean-Paul, F-92140 Clamart (FR)
(74) Mandataire: Delumeau, François Guy
(86) Numéro de dépôt international: PCT/FR2005/051103
(87) Numéro de publication internationale: WO 2006/067351

(56) Documents cités:
- US-A1- 2003 191 673
- US-A1- 2004 254 809
- WEBVIDEO4U: "Delivering world class audio visulas to the dating industry"[Online] 10 octobre 2004 (2004-10-10), pages 1-2, XP002341962 Internet Extrait de l'Internet: URL:http://web.archive.org/web/20041010080 440/http://www.webvideo4u.co.uk/industries /dating.html> [extrait le 2005-08-24]
- S. BOYD: "Online Speed Dating at Match.com"[Online] 8 janvier 2004 (2004-01-08), pages 1-1, XP002341963 Internet Extrait de l'Internet: URL:http://www.corante.com/getreal/archive s/001104print.html> [extrait le 2005-08-24]
- C. CAMPBELL: "Speed Dating: A New Form of Matchingmaking"[Online] 28 novembre 2004 (2004-11-28), pages 1-2, XP002341964 Internet Extrait de l'Internet: URL:http://web.archive.org/web/20041128091 131/http://health.discovery.com/centers/lo verelationships/articles/speed_dating.html > [extrait le 2005-08-24]

## Description

### Arrière-plan de l'invention

La présente invention propose un procédé et un système de rencontres par visiophonie pour mettre en relation des personnes désireuses d'effectuer des rencontres au moyen de terminaux conversationnels reliés à un réseau de télécommunication.

L'invention se situe dans le contexte général du "speed dating".

De façon connue, le speed dating est un mode de rencontres dans lequel des personnes appartenant à des groupes disjoints cherchent à se rencontrer au travers d'communications en tête-à-tête. Ce mode de rencontres est généralement organisé par des établissements (cafés, restaurants, bars,...) afin d'attirer une clientèle de célibataires.

Bien que très en vogue, notamment dans les grandes villes, le speed dating, dans sa version actuelle, comporte quelques limitations.

Premièrement, il nécessite que les personnes se réunissent dans un lieu de rencontres prédéterminé.

Deuxièmement, il faut veiller à ce que les communications respectent une durée prédéterminée ce, afin de s'assurer que toutes les personnes d'un groupe aient l'occasion de discuter avec toutes les personnes d'un autre groupe.

Le document US 2003/0191673 décrit une méthode et un systèm" pour connecter et appaiser des utilisateur dans un servia de dating électronique.

### Objet et résumé de l'invention

La présente invention a pour but principal de pallier de tels inconvénients.

A cet effet, et selon un premier aspect, elle vise un procédé de mise en relation de personnes dans un réseau de télécommunications, ce procédé comportant une étape de création d'au moins deux groupes de personnes en fonction de leurs profils, selon la revendication indépendente 1.

Le procédé permet d'établir des communications successives entre les personnes appartenant à deux groupes, pour des combinaisons de personnes appartenant à ces deux groupes, l'établissement de chaque communication comportant les étapes suivantes :
- sélection de deux personnes appartenant respectivement aux deux groupes ;
- établissement d'au moins un flux de données entre les personnes ; et
- rupture de ce flux de données après une durée prédéterminée.

Ainsi, la présente invention permet de mettre en relation des personnes à travers un réseau de télécommunication de type Internet via un service de visiophonie.

Dans le suite de ce document, on appellera réseau de télécommunication de type Internet, tout réseau permettant à des terminaux de communiquer en utilisant le protocole IP (Internet Protocole).

Ce service de mise en relation pourra être rendu à des personnes, par exemple abonnées à ce service, possédant une Webcam, un PC, un terminal UMTS, mais aussi à des personnes possédant des terminaux dédiés à ce service, à savoir des visiophones.

Le procédé de mise en relation selon l'invention permet avantageusement de s'assurer que les personnes des deux groupes auront l'occasion de se rencontrer, deux à deux, et ce pendant une durée prédéterminée de façon à ce que toutes les communications puissent être organisées sur une durée raisonnable.

Corrélativement, l'invention vise un système pour la mise en relation de personnes dans un réseau de télécommunications, ce système comportant des moyens de création d'au moins deux groupes de personnes en fonction de leurs profils, selon le revendication indépendente 3. Ce système comporte des moyens pour établir des communications successives entre les personnes appartenant à deux groupes, pour des combinaisons de personnes appartenant à ces deux groupes, ces moyens comportant :
- des moyens de sélection de deux personnes appartenant respectivement aux deux groupes ;
- des moyens d'établissement d'au moins un flux de données entre ces personnes ; et
- des moyens pour rompre le flux de données après une durée prédéterminée.

Préférentiellement, après l'étape de rupture d'une communication entre deux personnes, le procédé selon l'invention comporte une étape de mémorisation, dans une structure de données accessible à ces deux personnes, d'un avis sur cette communication, donné par l'une de ces deux personnes.

Corrélativement, le système selon l'invention comporte, dans un mode préféré de réalisation, une structure de données, accessible par les deux personnes ayant participé à une communication, pour mémoriser un avis sur cette communication donné par au moins une première de ces deux personnes.

La mémorisation de cet avis permet de fournir un service plus interactif où un participant a la possibilité de consulter les ressentis des gens qu'il a préalablement rencontrés.

A cet effet, le procédé pourra prévoir qu'après chaque communication, on laisse par exemple une minute à chacun des participants pour qu'il puisse annoter ses impressions sur la communication.

Lorsque le réseau est un réseau Internet, la structure de données permettant de mémoriser les avis peut être constituée par une page Web.

Dans ce cas, les abonnés ou utilisateurs accédant au service via un PC, une Webcam, ou un terminal UMTS peuvent directement enregistrer leurs avis sur la page Web.

En revanche, le procédé propose, pour les personnes abonnées utilisant un visiophone dédié, après l'étape de rupture :
- une étape de création d'une session établie entre cette personne et un portail dudit réseau ;
- une étape, au cours de cette session, d'envoi de l'avis par la personne, à destination du portail;
- l'étape de mémorisation étant effectuée par le portail.

Ce portail vidéo combine les technologies d'un serveur vidéo et d'un serveur Web. Lorsqu'un participant appelle un numéro déclaré au niveau du serveur vidéo, celui-ci invoque un script (dans un langage adapté à la vidéo) au serveur Web, via une requête http et enregistre l'avis du participant.

Du fait de l'utilisation d'un serveur Web, il est ainsi possible de générer des pages avec des contenus dynamiques par l'intermédiaire de scripts écrits par exemple en PHP.

Le langage PHP (hypertext preprocessor) étant connu de l'homme du métier, il ne sera pas décrit ici. Il s'agit d'un langage de script généraliste et open source spécialement conçu pour le développement d'applications Web. Il peut être intégré facilement au HTML. Pour plus de renseignements, l'homme du métier pourra se reporter à l'adresse http://fr2.php.net/manual/frindex.php.

Bien entendu, d'autres technologies telles que les servlets ou les JSP (Java Server Pages) peuvent être envisagées.

Avantageusement, la technologie du portail vidéo procure en outre d'autres avantages, en ce qu'il permet d'offrir à la fois une interface Web et une interface vidéo, ce qui réduit de manière conséquente le coût lié au développement d'un tel service.

En pratique, une session est établie entre le participant à la communication et le portail vidéo au moyen d'un protocole de visioconférence. Un écran d'accueil est envoyé au participant.

On pourra notamment utiliser le protocole de visioconférence H323, le protocole SIP, ou de façon générale tout protocole permettant d'établir une communication audio/vidéo entre deux terminaux via un réseau de télécommunication de type Internet.

Dans ces modes de réalisation, l'avis est préférentiellement envoyé au portail 40 sous la forme d'une commande DTMF.

Cette commande DTMF est envoyée par exemple en "out of band", dans le canal de signalisation H245 établi avec le portail vidéo.

Des pages en VXML sont hébergées sur le serveur Web ou générées dynamiquement par ce serveur Web, la réception d'une commande DTMF permettant d'enchaîner les écrans envoyés aux participants, et de rendre leur contenu dynamique.

Optionnellement, pour établir les communications suivantes, on utilise, au cours de l'étape de sélection précitée, au moins un avis sur une communication précédente.

Ceci permet par exemple d'organiser les communications selon des critères raffinés par les participants, mais aussi de privilégier, par exemple en accordant une durée prédéterminée supérieure, des entevues susceptibles de mettre en relation des personnes ayant plus de chances de se plaire.

Les avantages et les caractéristiques particulières du système selon l'invention étant identiques à ceux du procédé mentionné ci-dessus, ils ne seront pas rappelés ici.

Dans une architecture préférée, le système selon l'invention comporte :
- un serveur de sessions adapté à :
   - créer les groupes ;
   - sélectionner les personnes pour une entrevue éventuellement en utilisant un avis (d'une entrevue précédente);
- un distributeur d'appel adapté à :
   - obtenir une date et une durée prédéterminées pour une entrevue sur réception d'un message du serveur de sessions ;
   - sélectionner un lanceur d'appel parmi une pluralité de lanceurs d'appel pour établir au moins un flux de données audio et vidéo entre les personnes ;
   le lanceur d'appel, placé en coupure dans le flux, étant adapté :
- à rompre le flux après la durée prédéterminée ; et
- à envoyer un message au serveur de sessions après la rupture.

Le serveur de sessions peut être utilisé dans un réseau de télécommunication de type Internet, ce serveur de sessions comportant :
- des moyens pour créer au moins deux groupes disjoints de personnes en fonction de leur profil ; et
- des moyens pour initier, pour toutes les combinaisons possibles de deux personnes appartenant respectivement à ces deux groupes, une rencontre par visiophonie entre ces deux personnes.

Préférentiellement, le serveur de sessions implémente le serveur Web qui héberge la page Web mémorisant les avis des entrevues terminées.

Préférentiellement, ce serveur de sessions tient à jour une structure de données permettant de planifier l'ensemble des entrevues (participants, date de l'entrevue et durée de l'entrevue) et les profils des participants.

Afin de pouvoir ternir la charge de ce service de rencontres par visiophonie, une pluralité de lanceurs d'appels (ou de ponts de visioconférence) sont utilisés.

Un lanceur d'appel permet d'établir une communication, de façon transparente entre deux terminaux. Etant placé en coupure entre ces terminaux, il permet de gérer la durée de cette communication.

Le lanceur d'appel peut être utilisé dans un réseau de télécommunication de type Internet, et comportant :
- des moyens pour établir sur réception d'un message au moins un flux audio et vidéo entre deux terminaux du réseau à une date prédéterminée ; et
- des moyens pour rompre ce flux après une durée prédéterminée.

Pour répartir la charge sur ces différents lanceurs d'appels, le distributeur d'appel utilise préférentiellement un calcul de type round robin pour sélectionner le lanceur d'appel le moins chargé en fonction de la date et de la durée de l'entrevue obtenue à partir du serveur de sessions.

De façon connue, dans un calcul de type round robin, chaque processus dispose d'un quantum de temps pendant lequel il peut s'exécuter, avant de laisser la place au processus suivant.

Le lanceur d'appel comporte une horloge (timer) et rompt le flux audio vidéo entre les participants lorsque la durée prédéterminée prévue pour une entrevue est écoulée.

Selon une implémentation préférée, le serveur de sessions et le lanceur d'appel sont constitués par des ordinateurs conventionnels mettant en oeuvre des programmes d'ordinateur.

Un programme d'ordinateur stocké sur un support d'informations peut être exécuté par un lanceur d'appel. Il comporte des moyens pour mettre en oeuvre :
- une étape pour établir sur réception d'un message au moins un flux audio et vidéo entre deux terminaux dudit réseau, à une date prédéterminée ; et
- une étape de rupture dudit flux après une durée prédéterminée.

Un programme d'ordinateur stocké sur un support d'information, peut être exécuté par un serveur de sessions. Il comporte des instructions permettant la mise en oeuvre :
- d'une étape de création d'au moins deux groupes disjoints de personnes en fonction de leur profil ; et
- une étape pour initier, pour toutes les combinaisons possibles de deux personnes appartenant respectivement à ces deux groupes, une rencontre par visiophonie entre ces deux personnes.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable

Un support d'informations peut comporter des instructions de l'un au moins des programmes d'ordinateur tels que mentionnés ci-dessus.

Ce support d'informations peut être n'importe quelle entité ou dispositif capable de stocker le programme. Par exemple, il peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, ce support d'informations peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, ce support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrant un exemple de réalisation dépourvu de tout caractère limitatif. Sur les figures :
- la figure 1 représente, sous forme d'organigramme, les principales étapes d'un procédé de mise en relation de personnes conforme à l'invention dans un mode préféré de réalisation ; et
- la figure 2 représente un système de mise en relation de personnes conforme à l'invention dans un mode préféré de réalisation.

### Description détaillée d'un mode de réalisation

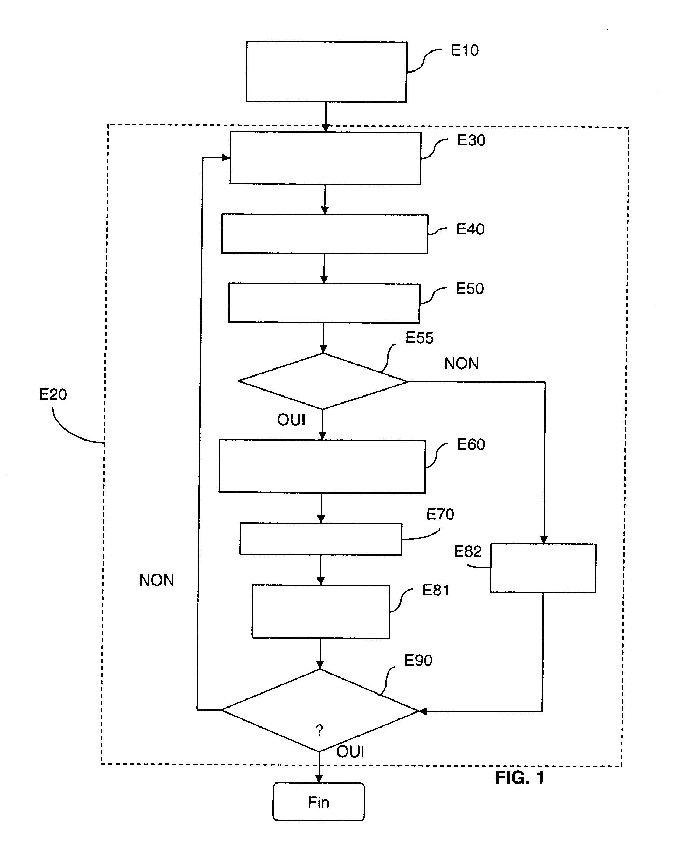

La **figure 1** représente un procédé de mise en relation de personnes conforme à l'invention dans un mode préféré de réalisation.

Ce procédé comporte une première étape E10 au cours de laquelle on crée des groupes de personnes en fonction de leurs profils.

Le profil d'un abonné est typiquement renseigné par celui-ci au moment de son abonnement au service de rencontres par visiophonie, ou ultérieurement, en remplissant un formulaire au moyen du terminal lui permettant d'accéder au service (visiophone, ordinateur personnel, téléphone UMTS).

Le profil comporte par exemple les caractéristiques (âge, sexe, taille, couleur des yeux,...) de la personne ou des informations sur ses goûts (sport, culture, lecture,...).

Pour chaque personne, le profil renseigne également les caractéristiques ou les goûts des personnes qu'il souhaite rencontrer via le service de rencontres par visiophonie.

Par exemple, un profil peut contenir une information selon laquelle une personne souhaite préférentiellement rencontrer une personne non fumeur.

L'étape E10 de création de groupes consiste principalement à regrouper dans des groupes des personnes ayant des caractéristiques, des goûts ou des exigences similaires.

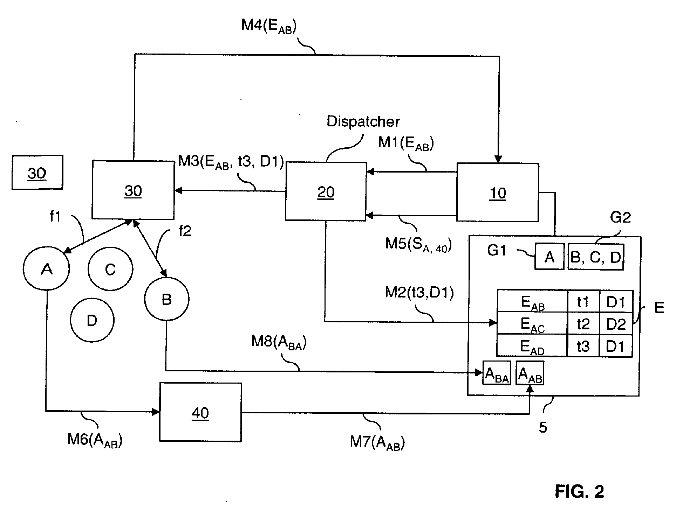

Dans l'exemple décrit ici, on supposera en référence à la **figure 2** que cette étape E10 débouche sur la création :
- d'un premier groupe G1 comportant l'unique personne A ; et
- d'un deuxième groupe G2 comportant les trois personnes B, C et D.

Le procédé selon l'invention permet, dans sa généralité (représentée par une étape générale E20), d'établir des communications entre les personnes appartenant à deux groupes différents, selon des combinaisons possibles.

Ainsi, dans l'exemple décrit ici, l'invention permettra d'établir les communications suivantes :
- communication E_{AB} entre les personnes A et B ;
- communication E_{AC} entre les personnes A et C ; et
- communication E_{AD} entre les personnes A et D.

Cette étape générale E20 va maintenant être décrite en détail.

Tout d'abord, on effectue une sélection (étape E30) de deux personnes appartenant aux groupes différents G1 et G2.

Cette sélection peut être effectuée sur différents critères, par exemple par ordre alphabétique, ou selon l'ordre d'inscription des personnes au service de rencontres par visiophonie.

Dans l'exemple décrit ici, on supposera que cette étape de sélection est effectuée par ordre alphabétique.

En conséquence, cette étape de sélection permet de sélectionner les personnes A et B des groupes G1 et G2.

Cette étape E30 de sélection est suivie par une étape E40 d'établissement d'au moins un flux de données audio et vidéo entre les personnes sélectionnées à l'étape précédente E30.

Lorsque l'établissement de ce flux de données est effectué, la communication peut commencer.

Conformément à l'invention, cette communication est établie pour une durée déterminée, typiquement moins d'une dizaine de minutes.

En conséquence, le procédé de mise en relation selon l'invention comporte une étape E50 de rupture du flux de données précité à l'expiration de cette durée prédéterminée.

Dans un mode préféré de réalisation, le procédé selon l'invention permet en outre d'enregistrer les avis d'une personne suite à une communication.

A cet effet, si le terminal d'un utilisateur est un visiophone (test E55 positif), on établit une session entre ce visiophone et un portail vidéo 40.

Comme déjà décrit, ce portail vidéo combine les fonctions de serveur vidéo et d'un serveur Web, et la session est établie avec la personne au moyen du protocole de visioconférence.

Au cours de cette session, le portail vidéo envoie, sur le terminal visiophone de la personne, un écran d'accueil sur lequel il peut donner un avis sur la communication qui vient de se terminer avec l'autre participant.

Dans ce document, on notera A_{AB} l'avis de la personne A sur la communication E_{AB} et A_{BA} l'avis de la personne B sur cette même communication E_{AB}.

Préférentiellement, cet avis peut être choisi parmi un ensemble de propositions disponibles sur l'écran d'accueil au moyen d'une touche du visiophone.

Une commande DTMF est alors envoyée dans le canal de signalisation H245 au portail 40 (étape E70).

Quoi qu'il en soit, l'avis A_{AB} est mémorisé, au cours d'une étape E81, par le portail 40, dans une structure de données 5 accessible aux deux participants A et B.

Cette structure de données 5 est accessible via une page Web si l'abonné est sur Internet ou une page vxml servie par le serveur vidéo (pour un abonné possédant un terminal dédié).

En revanche, lorsque le participant utilise un terminal autre qu'un visiophone, à savoir par exemple un ordinateur personnel, une Webcam ou un téléphone UMTS (résultat du test 55 négatif), cet utilisateur mémorise directement, au cours d'une étape E82, son avis dans la page Web.

Cette page Web peut bien entendu être accédée ultérieurement par les abonnés au service de rencontres par visiophonie pour consultation des avis donnés par les personnes qu'il a rencontrées.

Quoi qu'il en soit, les étapes E81 et E82 de mémorisation sont suivies par un test E90 au cours duquel on vérifie si d'autres communications peuvent être effectuées entre les personnes des groupes G1 et G2.

Dans l'exemple décrit ici, deux autres communications peuvent être effectuées entre la personne A et la personne C (communication E_{AC}) d'une part, et entre la personne A et la personne D (communication E_{AD}) d'autre part.

Lorsque d'autres communications doivent être effectuées, le résultat du test E90 est négatif.

Ce test est alors suivi par l'étape E30, déjà décrite, au cours de laquelle on sélectionne deux personnes pour établir la communication suivante.

Préférentiellement, cette étape E30 de sélection utilise au moins un avis d'une communication précédente.

Ainsi, en supposant que la personne A ait émis au cours de la communication E_{AB} un avis selon lequel elle souhaiterait préférentiellement rencontrer une personne non fumeur, et en supposant que les personnes C et D sont respectivement fumeur et non fumeur, l'étape E30 peut permettre de sélectionner en priorité la communication E_{AD} entre les personnes A et D.

Quoi qu'il en soit, l'étape E30 de sélection est suivie par l'étape E40 d'établissement d'un flux de données entre les personnes sélectionnées comme décrit précédemment.

Lorsque toutes les communications possibles entre les personnes des deux groupes ont été effectuées, le résultat du test E90 est positif et le procédé de mise en relation se termine dans ce mode de réalisation.

Nous allons maintenant décrire en référence à la **figure 2**, un système pour mettre en oeuvre le procédé décrit précédemment.

Ce système est mis en oeuvre dans un réseau de télécommunications offrant des services de voix sur le protocole IP (Internet Protocole), par exemple dans un réseau VoIP (Voice over IP).

Dans le mode de réalisation décrit ici, le système comporte un serveur de sessions 10 (serveur Web) auquel une personne abonnée au service de rencontres peut se connecter au moyen d'un téléphone cellulaire UMTS ou de tout équipement informatique possédant une connexion Internet (PC, Webcam,...).

Le site Web permet notamment à un abonné de renseigner le formulaire lui permettant de définir son profil et de s'inscrire à une séance de mise en relation de personnes.

Préférentiellement, l'inscription à une session peut être confirmée par l'envoi d'un mail ou d'un message (par exemple SMS).

Pour les abonnés ne disposant que d'un terminal dédié, sans connexion Internet, le renseignement du formulaire de profil et l'inscription à une séance donnée s'effectuent auprès du portail vidéo 40.

A cet effet, le portail 40 est adapté à émettre une requête http au serveur Web 10 pour demander l'envoi d'une page Voice XML permettant à un tel abonné de saisir ses réponses auprès du portail 40.

Quoi qu'il en soit, le serveur Web 10 comporte tous les profils des utilisateurs A, B, C, D abonnés au service de rencontres par visiophonie.

Ce serveur Web 10 comporte également des moyens de création des groupes G1, G2 de personnes en fonction de leur profil comme décrit précédemment en référence à l'étape E10 de la figure 1.

Toutes ces informations sont regroupées préférentiellement dans une base de données 5 qui comporte les profils des abonnés, les informations concernant l'organisation des prochaines séances (date et durée de la séance, liste des personnes participant,...) et les avis A_{AB}, A_{BA} des utilisateurs sur leurs communications déjà effectuées.

Optionnellement, le système selon l'invention comporte un serveur de messagerie ou d'envoi de SMS pour confirmer aux abonnés au service de rencontres la tenue d'une séance de mise en relation, par exemple 2 heures avant le début de cette séance.

Conformément à l'invention, le système permet d'établir automatiquement des communications successives entre les personnes de différents groupes.

A cet effet, il comporte des moyens de sélection de deux personnes appartenant à des groupes différents.

Dans le mode préféré de réalisation décrit ici, cette fonctionnalité est réalisée du serveur Web 10.

Ce serveur Web 10 est en conséquence adapté à mettre en oeuvre l'étape E30, déjà décrite, de sélection de deux personnes dans les groupes, par exemple selon un ordre alphabétique ou en utilisant un avis d'un utilisateur sur une communication précédente.

Le système comporte également des moyens d'établissement d'au moins un flux de données audio et vidéo entre deux personnes sélectionnées.

Afin d'initier une communication, le serveur de sessions 10 envoie un message M1 à un distributeur d'appel 20 adapté à déterminer, par exemple par un calcul de type round robin, un lanceur d'appels, ou MCU (Multipoint Central Unit), entre ces abonnés.

Ce distributeur d'appel 20 accède ainsi (message M2) à la base de données 5 pour obtenir les informations nécessaires à l'établissement d'une communication (adresse des terminaux, date t1 et durée D1 de la communication notamment).

Une fois le pont 30 sélectionné, le distributeur d'appel 20 envoie un message M3 à ce pont 30 en lui communiquant les caractéristiques de la communication pour qu'il puisse établir un flux de données audio et vidéo entre les participants.

Dans le mode préféré de réalisation décrit ici, le lanceur d'appel 30 établit en fait deux flux f1, f2 respectivement entre lui-même et chacun des deux participants A, B, se plaçant ainsi en coupure dans le flux de données entre les deux personnes, ce qui lui permet de rompre ce flux (étape E50) après la durée prédéterminée D1 de la communication.

A l'issue de la durée prédéterminée D1, le lanceur d'appel 30 rompt le flux entre les deux participants A et B et envoie un message M4 au serveur de sessions pour l'informer de la fin de la communication.

Comme décrit précédemment, le serveur de sessions 10 peut, dans un mode préféré de réalisation, envoyer un message M5 au distributeur d'appels 20 pour lui demander d'établir au moins une session entre l'un des participants A, B et le portail vidéo 40 pour l'enregistrement d'un avis sur la communication terminée.

Préférentiellement, ce message M5 n'est envoyé que pour les abonnés utilisant un visiophone dédié au service de rencontres.

Sur réception de ce message M5, le distributeur d'appels établit ainsi une communication entre le visiophone de l'utilisateur et le portail vidéo 40.

Préférentiellement, l'avis de l'utilisateur sur la communication précédente est envoyé au portail vidéo 40 via l'envoi d'un message M6 constitué par une séquence de commandes DTMF.

Le portail vidéo 40 envoie une requête vers le serveur de sessions 10 pour enregistrer cet avis dans la structure de données de ce serveur.

Préférentiellement, le système comporte également un site d'administration permettant à un administrateur d'établir des statistiques sur l'utilisation du service de rencontres par visiophonie, par exemple au moyen de requêtes à destination des équipements précités.

Le système selon l'invention comporte également préférentiellement des moyens de facturation de ce service.

## Revendications

1. Procédé de mise en relation de personnes dans un réseau de télécommunications, ce procédé comportant une étape (E10) de création d'au moins deux groupes de personnes en fonction de leurs profils, une étape d'établissement (E20) de communications successives (E_{AB}, E_{AC}, E_{AD}) entre des personnes (A, B, C, D) appartenant à deux groupes disjoints (G1, G2), pour toutes les combinaisons possibles ((A, B) , (A, C), (A, D)) de personnes appartenant à ces deux groupes (G1, G2), l'établissement (E20) d'une communication (E_{AB}) comportant:
- une étape de sélection (E30) de deux personnes (A, B) appartenant respectivement aux deux groupes disjoints;
- une étape d'établissement (E40) d'au moins un flux (f1, f2) de données entre lesdites personnes ; et
- une étape de rupture (E50) dudit au moins un flux de données après une durée (D1) prédéterminée ;
**caractérisé en ce qu'**ii comporte :
- une étape de mémorisation (E81, E82) d'un avis (A_{AB}) sur ladite communication (E_{AB}), donné par au moins une première (A) des deux personnes (A, B), dans une page Web (5) accessible par les deux personnes (A, B), ledit avis (A_{AB}) étant enregistré dans ladite page Web (5), après ladite étape (E50) de rupture :
- soit directement par ladite au moins une première personne (A) ;
- soit dynamiquement par un serveur Web mis en oeuvre par un portail (40) dudit réseau, ledit avis (A_{AB}) étant envoyé (E70) audit portail (40) au cours d'une session (M6_{AB}) établie (E60) entre ladite au moins une première personne (A) et ledit portail (40) ; et **en ce que** :
- ladite étape (E30) de sélection comprend une étape
d'utilisation d'au moins un avis (A_{AB}) sur une communication (E_{AB}) précédente préalablement mémorisé dans ladite page Web, ce qui permet que ladite durée prédéterminée soit augmentée pour privilégier les communications entre les personnes ayant plus de chances de se plaire.

2. Procédé selon la revendication **1**, **caractérisé en ce que** ledit avis (A_{AB}) est envoyé (E70) audit portail (40) sous la forme d'une commande DTMF.

3. Système pour la mise en relation de personnes dans un réseau de télécommunications, ce système comportant des moyens (10) de création d'au moins deux groupes (G1, G2) de personnes en fonction de leurs profils, des moyens (10, 20, 30) pour établir des communications successives (E_{AB}, E_{AC}, E_{AD}) entre les personnes (A, B, C, D) appartenant à deux groupes disjoints (G1, G2), pour toutes les combinaisons possibles ((A, B) , (A, C), (A, D)) de personnes appartenant à ces deux groupes (G1, G2), lesdits moyens (10, 20, 30) comportant :
- des moyens (10) de sélection de deux personnes (A, B) appartenant respectivement aux deux groupes disjoints ;
- des moyens (20, 30) d'établissement d'au moins un flux (f1, f2) de données entre lesdites personnes ;
- des moyens (30) pour rompre ledit au moins un flux (f1, f2) de données après une durée prédéterminée ; et
- des moyens de mémorisation (E81, E82) d'un avis (A_{AB}) sur une communication (E_{AB}) donné par au moins une première (A) des deux personnes (A. B) ayant participé à ladite communication, dans une page Web (5), accessible par les deux personnes (A, B);
**caractérisé en ce qu'**il comporte :
- des moyens permettant, à l'issue d'une communication (E_{AB}) entre deux personnes (A, B), à au moins une première (A) des deux personnes (A, B), d'enregistrer directement (E82) ledit avis (A_{AB}) dans ladite page Web (5) si ladite première personne est sur Internet ; et
- des moyens (10, 30) pour établir, à l'issue d'une communication (E_{AB}) entre deux personnes (A, B), une session (M6_{AB}) entre au moins une première (A) des deux personnes (A, B) et un portail (40) dudit réseau, ledit portail (40) comportant des moyens d'obtention dudit avis (A_{AB}) en provenance de ladite première personne (A) et un serveur Web apte à mémoriser dynamiquement ledit avis (A_{AB}) dans ladite page Web (5) ; et **en ce que** :
- lesdits moyens (10) de sélection sont aptes, pour sélectionner lesdites deux personnes appartenant aux deux dits groupes disjoints, à utiliser au moins un avis (A_{AB}) sur une communication (E_{AB}) précédente préalablement mémorisé dans ladite page Web (5), ce qui permet que ladite durée prédéterminée soit augmentée pour privilégier les communications entre les personnes ayant plus de chances de se plaire.

4. Système selon la revendication **3, caractérisé en ce que** lesdits moyens d'obtention **dudit portail (40)** sont adaptés à obtenir ledit avis (A_{AB}) sous la forme d'une commande DTMF.

## Claims

1. Method for connecting people in a telecommunications network, this method comprising a step (E10) of creating at least two groups of people as a function of their profiles, a step (E20) of establishing successive communications (E_{AB}, E_{AC}, E_{AD}) between people (A, B, C, D) belonging to two disjoint groups (G1, G2), for all the possible combinations ((A, B), (A, C), (A, D)) of people belonging to these two groups (G1, G2), the establishing (E20) of a communication (E_{AB}) comprising:
- a step (E30) of selecting two people (A, B) belonging respectively to the two disjoint groups;
- a step (E40) of establishing at least one stream (f1, f2) of data between said people; and
- a step (E50) of breaking said at least one stream of data after a predetermined duration (D1);
**characterized in that** it comprises:
- a step (E81, E82) of storing an opinion (A_{AB}) on said communication (E_{AB}), given by at least one first (A) of the two people (A, B), in a Web page (5) accessible by the two people (A, B), said opinion (A_{AB}) being recorded in said Web page (5), after said step (E50) of breaking:
- either directly by said at least one first person (A);
- or dynamically by a Web server implemented by a portal (40) of said network, said opinion (A_{AB}) being dispatched (E70) to said portal (40) in the course of a session (M6_{AB}) established (E60) between said at least one first person (A) and said portal (40); and **in that**:
- said step (E30) of selecting comprises a step of using at least one opinion (A_{AB}), previously stored in said Web page, about a previous communication (E_{AB}), this making it possible for said predetermined duration to be increased so as to favour the communications between the people having more chance of liking one another.

2. Method according to Claim 1, **characterized in that** said opinion (A_{AB}) is dispatched (E70) to said portal (40) in the form of a DTMF command.

3. System for connecting people in a telecommunications network, this system comprising means (10) for creating at least two groups (G1, G2) of people as a function of their profiles, means (10, 20, 30) for establishing successive communications (E_{AB}, E_{AC}, E_{AD}) between the people (A, B, C, D) belonging to two disjoint groups (G1, G2), for all the possible combinations ((A, B), (A, C), (A, D)) of people belonging to these two groups (G1, G2), said means (10, 20, 30) comprising:
- means (10) for selecting two people (A, B) belonging respectively to the two disjoint groups;
- means (20, 30) for establishing at least one stream (f1, f2) of data between said people;
- means (30) for breaking said at least one stream (f1, f2) of data after a predetermined duration; and
- means (E81, E82) for storing an opinion (A_{AB}) on a communication (E_{AB}), given by at least a first (A) of the two people (A, B) having participated in said communication, in a Web page (5) accessible by the two people (A, B);
**characterized in that** it comprises:
- means making it possible, on completion of a communication (E_{AB}) between two people (A, B), for at least a first (A) of the two people (A, B), to record directly (E82) said opinion (A_{AB}) in said Web page (5) if said first person is on the Internet; and
- means (10, 30) for establishing, on completion of a communication (E_{AB}) between two people (A, B), a session (M6_{AB}) between at least one first (A) of the two people (A, B) and a portal (40) of said network, said portal (40) comprising means for obtaining said opinion (A_{AB}) originating from said first person (A) and a Web server able to dynamically store said opinion (A_{AB}) in said Web page (5); and **in that**:
- said selecting means (10) are able, in order to select said two people belonging to the two said disjoint groups, to use at least one opinion (A_{AB}), previously stored in said Web page (5), about a previous communication (E_{AB}), this making it possible for said predetermined duration to be increased so as to favour the communications between the people having more chance of liking one another.

4. System according to Claim 3, **characterized in that** said means for obtaining said portal (40) are suitable for obtaining said opinion (A_{AB}) in the form of a DTMF command.

## Patentansprüche

1. Verfahren zur Verbindung von Personen in einem Telekommunikationsnetz, wobei dieses Verfahren einen Schritt (E10) der Erzeugung von mindestens zwei Gruppen von Personen in Abhängigkeit von ihren Profilen und einen Schritt des Aufbaus (E20) von aufeinanderfolgenden Verbindungen (E_{AB}, E_{AC}, E_{AD}) zwischen zu zwei getrennten Gruppen (G1, G2) gehörenden Personen (A, B, C, D) für alle möglichen Kombinationen ((A, B), (A, C), (A, D)) von zu diesen zwei Gruppen (G1, G2) gehörenden Personen aufweist, wobei der Aufbau (E20) einer Verbindung (E_{AB}) aufweist:
- einen Schritt der Auswahl (E30) von zwei Personen (A, B), die je zu den zwei getrennten Gruppen gehören;
- einen Schritt des Aufbaus (E40) mindestens eines Datenstroms (f1, f2) zwischen den Personen; und
- einen Schritt der Unterbrechung (E50) des mindestens einen Datenstroms nach einer vorbestimmten Dauer (D1);
**dadurch gekennzeichnet, dass** es aufweist:
- einen Schritt der Speicherung (E81, E82) einer Meinung (A_{AB}) über die Verbindung (E_{AB}), die von mindestens einer ersten (A) der zwei Personen (A, B) abgegeben wird, auf einer für die zwei Personen (A, B) zugänglichen Webseite (5), wobei die Meinung (A_{AB}) nach dem Unterbrechungsschritt (E50) auf der Webseite (5) eingetragen wird:
- entweder direkt von der mindestens einen ersten Person (A);
- oder dynamisch von einem Webserver, der von einem Portal (40) des Netzes eingesetzt wird, wobei die Meinung (A_{AB}) an das Portal (40) während einer Sitzung (M6_{AB}) gesendet wird (E70), die zwischen der mindestens einen ersten Person (A) und dem Portal (40) aufgebaut wird (E60); und dass:
- der Auswahlschritt (E30) einen Schritt der Verwendung mindestens einer Meinung (A_{AB}) über eine vorhergehende Verbindung (E_{AB}) enthält, die vorher auf der Webseite gespeichert wurde, was es ermöglicht, dass die vorbestimmte Dauer erhöht wird, um die Verbindungen zwischen den Personen zu begünstigen, die mehr Chancen haben, sich zu gefallen.

2. Verfahren nach Anspruch 1, **dadurch gekennzeichnet, dass** die Meinung (A_{AB}) in Form eines DTMF-Befehls an das Portal (40) gesendet wird (E70).

3. System zur Verbindung von Personen in einem Telekommunikationsnetz, wobei dieses System Einrichtungen (10) zur Erzeugung von mindestens zwei Gruppen (G1, G2) von Personen in Abhängigkeit von ihren Profilen und Einrichtungen (10, 20, 30) für den Aufbau von aufeinanderfolgenden Verbindungen (E_{AB}, E_{AC}, E_{AD}) zwischen den zu zwei getrennten Gruppen (G1, G2) gehörenden Personen (A, B, C, D) für alle möglichen Kombinationen ((A, B), (A, C), (A, D)) von zu diesen zwei Gruppen (G1, G2) gehörenden Personen aufweist, wobei die Einrichtungen (10, 20, 30) aufweisen:
- Einrichtungen (10) zur Auswahl von zwei Personen (A, B), die je zu den zwei getrennten Gruppen gehören;
- Einrichtungen (20, 30) für den Aufbau mindestens eines Datenstroms (f1, f2) zwischen den Personen;
- Einrichtungen (30), um den mindestens einen Datenstrom (f1, f2) nach einer vorbestimmten Dauer zu unterbrechen; und
- Einrichtungen zum Speichern (E81, E82) einer Meinung (A_{AB}) über eine gegebene Verbindung (E_{AB}), die von mindestens einer ersten (A) der zwei Personen (A, B) abgegeben wird, die an der Verbindung teilgenommen hat, auf einer für die zwei Personen (A, B) zugänglichen Webseite (5);
**dadurch gekennzeichnet, dass** es aufweist:
- Einrichtungen, die es nach einer Verbindung (E_{AB}) zwischen zwei Personen (A, B) mindestens einer ersten (A) der zwei Personen (A, B) ermöglichen, direkt (E82) die Meinung (A_{AB}) auf der Webseite (5) einzutragen, wenn die erste Person im Internet ist; und
- Einrichtungen (10, 30), um nach einer Verbindung (E_{AB}) zwischen zwei Personen (A, B) eine Sitzung (M6_{AB}) zwischen mindestens einer ersten (A) der zwei Personen (A, B) und einem Portal (40) des Netzes aufzubauen, wobei das Portal (40) Einrichtungen für den Erhalt der Meinung (A_{AB}) von der ersten Person (A) und einen Webserver aufweist, der fähig ist, die Meinung (A_{AB}) dynamisch auf der Webseite (5) zu speichern; und dass:
- die Auswahleinrichtungen (10) für die Auswahl der zu den zwei getrennten Gruppen gehörenden zwei Personen in der Lage sind, mindestens eine Meinung (A_{AB}) über eine vorhergehende Verbindung (E_{AB}), die vorher auf der Webseite (5) gespeichert wurde, zu verwenden, was es ermöglicht, dass die vorbestimmte Dauer erhöht wird, um die Verbindungen zwischen den Personen zu begünstigen, die größere Chancen haben, sich zu gefallen.

4. System nach Anspruch 3, **dadurch gekennzeichnet, dass** die Erhalt-Einrichtungen des Portals (40) geeignet sind, um die Meinung (A_{AB}) in Form eines DTMF-Befehls zu erhalten.
